(19) **Europäisches Patentamt / European Patent Office / Office européen des brevets**

(11) **EP 4 661 145 A1**

(12) **EUROPEAN PATENT APPLICATION**
published in accordance with Art. 153(4) EPC

(43) Date of publication:
**10.12.2025 Bulletin 2025/50**

(21) Application number: **24749894.2**

(22) Date of filing: **11.01.2024**

(51) International Patent Classification (IPC):
**H01M 10/0587** (2010.01)    **H01M 4/13** (2010.01)
**H01M 4/48** (2010.01)

(52) Cooperative Patent Classification (CPC):
**H01M 4/13; H01M 4/48; H01M 10/0587;**
Y02E 60/10; Y02P 70/50

(86) International application number:
**PCT/JP2024/000509**

(87) International publication number:
**WO 2024/161939 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.01.2023 JP 2023013064**

(71) Applicant: **Panasonic Energy Co., Ltd.**
**Osaka 570-8511 (JP)**

(72) Inventors:
- **YOSHINARI, Rina**
  **Kadoma-shi, Osaka 571-0057 (JP)**
- **ISHIGURO, Tasuku**
  **Kadoma-shi, Osaka 571-0057 (JP)**

(74) Representative: **Novagraaf International SA**
**Chemin de l'Echo 3**
**1213 Onex, Geneva (CH)**

(54) **SECONDARY BATTERY**

(57)    Disclosed is a secondary battery in which a positive electrode and a negative electrode are wound with a separator interposed therebetween. The positive electrode includes a belt-shaped positive electrode current collector, and a positive electrode mixture layer. The positive electrode has a positive electrode end part including one end thereof in the lateral direction, and a positive electrode main part other than that. The positive electrode end part has an exposed portion of the positive electrode current collector provided intermittently at a plurality of positions along the longitudinal direction of the positive electrode current collector, and the exposed portion is free of the positive electrode mixture layer from the one end in the lateral direction through to the positive electrode main part. The negative electrode includes a belt-shaped negative electrode current collector. The negative electrode has a negative electrode end part facing at least part of the positive electrode end part, and a negative electrode main part other than that. The expansion rate of the negative electrode is higher at the negative electrode end part than at the negative electrode main part.

FIG. 1

**Description**

[Cross Reference to Related Application]

The present disclosure claims priority with respect to the Japanese Patent Application No. 2023-013064 filed on January 31, 2023, and the entire content of the patent application is incorporated herein by reference into the present specification.

[Technical Field]

The present disclosure relates to a secondary battery.

[Background Art]

Patent Literature 1 proposes "an electrochemical device, comprising: a positive electrode including a positive electrode core material, and a positive electrode material layer supported on the positive electrode core material; a negative electrode including a negative electrode core material, and a negative electrode material layer supported on the negative electrode core material; a separator interposed between the positive electrode and the negative electrode; a nonaqueous electrolyte; a positive electrode current collecting plate electrically connected to the positive electrode core material; and a negative electrode current collecting plate electrically connected to the negative electrode core material, wherein: the positive electrode, the negative electrode and the separator constitute a columnar wound body; a positive electrode core material exposed portion is provided at an end portion along a longitudinal direction of the positive electrode core material; a negative electrode core material exposed portion is provided at an end portion along an longitudinal direction of the negative electrode core material; the positive electrode core material exposed portion protrudes from one end face of the wound body and is welded to the positive electrode current collecting plate; the negative electrode core material exposed portion protrudes from the other end face of the wound body and is welded to the negative electrode current collecting plate; and a thickness of the positive electrode core material is larger than a thickness of the negative electrode core material".

[Citation List]

[Patent Literature]

Patent Literature 1: International Publication WO 2020/045375

[Summary of Invention]

[Technical Problem]

Unlike in Patent Literature 1, in the case where a positive electrode current collector exposed portion that does not have a positive electrode mixture layer is provided partially at the end part of the positive electrode, the stress applied to one end of the negative electrode in the lateral direction thereof in association with charging and discharging of the secondary battery is reduced. This can cause a gap to be formed between the electrode plates near the end face of the electrode group formed by winding the positive electrode, the negative electrode, and the separator. Such a gap has a risk of inducing peeling of the negative electrode mixture layer or inducting deposition of metal lithium.

[Solution to Problem]

One aspect of the present disclosure relates to a secondary battery, including a positive electrode, a negative electrode, an electrolyte, and a separator, wherein the positive electrode and the negative electrode are wound with the separator interposed between the positive electrode and the negative electrode, the positive electrode includes a belt-shaped positive electrode current collector, and a positive electrode mixture layer disposed on the positive electrode current collector, the positive electrode has a positive electrode end part including one end of the positive electrode in a lateral direction, and a positive electrode main part other than the positive electrode end part, the positive electrode end part has an exposed portion of the positive electrode current collector provided intermittently at a plurality of positions along a longitudinal direction of the positive electrode current collector, the exposed portion being free of the positive electrode mixture layer from the one end in the lateral direction through to the positive electrode main part, the negative electrode includes a belt-shaped negative electrode current collector, the negative electrode has a negative electrode end part facing at least part of the positive electrode end part, and a negative electrode main part other than the negative electrode end part, and an expansion rate of the negative electrode is higher at the negative electrode end part than at the negative electrode main part.

[Advantageous Effects of Invention]

According to the present disclosure, in the case where a positive electrode current collector exposed portion that does not have a positive electrode mixture layer is provided at an end part of the positive electrode, it is possible to suppress the occurrence of a gap between the electrode plates near the end face of an electrode group in which the positive electrode, the negative electrode, and the separator are wound together.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawings]

[FIG. 1] A schematic sectional view of a secondary battery according to an example of an embodiment.
[FIG. 2] A schematic plan view of a positive electrode according to an example of an embodiment.
[FIG. 3] A schematic plan view of a negative electrode according to an example of an embodiment.

[Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, when referring to "a range of a numerical value A to a numerical value B," the range includes the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit.

Secondary batteries include nonaqueous electrolyte secondary batteries, such as lithium-ion secondary batteries, lithium-metal secondary batteries, and solid-state batteries containing a gel electrolyte or a solid electrolyte. That is, secondary batteries may be liquid secondary batteries containing an electrolyte solution as an electrolyte, and may be all-solid-state secondary batteries containing a solid electrolyte.

A secondary battery according to the present disclosure includes a belt-shaped positive electrode, a belt-shaped negative electrode, an electrolyte, and a separator disposed between the positive electrode and the negative electrode. The positive electrode and the negative electrode are wound with the separator interposed therebetween. That is, the secondary battery includes a wound electrode group. The outer shape of the wound electrode group is columnar, and may be, for example, cylindrical.

[Positive electrode]

The positive electrode includes a belt-shaped positive electrode current collector, and a positive electrode mixture layer disposed on the positive electrode current collector. The positive electrode mixture layer may be in the form of film. The positive electrode has a positive electrode current collector, and a positive electrode mixture layer formed (or supported) on a partial region of a surface of the positive electrode current collector. Specifically, the positive electrode has a positive electrode end part including one end in the lateral direction of the positive electrode, and a positive electrode main part other than the positive electrode end part. The positive electrode end part has an exposed portion of the positive electrode current collector provided intermittently at a plurality of positions along the longitudinal direction of the positive electrode current collector. The exposed portion of the positive electrode current collector is free of the positive electrode mixture layer from the one end in the lateral direction through to the positive electrode main part.

The positive electrode mixture layer is constituted of a positive electrode mixture. The positive electrode mixture contains a positive electrode active material as an essential component. The positive electrode mixture layer, therefore, may be called a positive electrode active material layer. The positive electrode mixture layer is supported on the surface of one or both sides of the positive electrode current collector.

EP 4 661 145 A1

The positive electrode mixture contains a positive electrode active material as an essential component, and may contain, as optional components, a binder, a conductive agent, a thickener, and the like. The positive electrode active material can be a material that reversibly absorbs and releases lithium ions. The positive electrode active material may be, for example, a lithium-containing transition metal oxide. Typical examples of the lithium-containing transition metal oxide include lithium cobalt oxide and lithium nickel oxide, which have a layered crystal structure of rock-salt type.

The positive electrode mixture layer may be formed by, for example, applying a positive electrode slurry in which a positive electrode mixture containing particles of a positive electrode active material as an essential component and optional components (binder, conductive agent, etc.) is dispersed in a dispersion medium, onto a surface of a positive electrode current collector, followed by drying. The applied film after drying may be rolled, as necessary. The positive electrode mixture layer may be formed on one surface or both surfaces of the positive electrode current collector. As the dispersion medium of the positive electrode slurry, N-methyl-2-pyrrolidone (NMP) and the like are used.

As the positive electrode active material, for example, a composite oxide containing lithium and a transition metal, such as Ni, Co, and Mn, can be used. Examples thereof include $Li_aCoO_2$, $Li_aNiO_2$, $Li_aMnO_2$, $Li_aCo_bNi_{1-b}O_2$, $Li_aCo_bM_{1-b}O_c$, $Li_aNi_{1-b}M_bO_c$, $Li_aMn_2O_4$, $Li_aMn_{2-b}M_bO_4$, $LiMPO_4$, and $Li_2MPO_4F$, where M is at least one selected from the group consisting of Na, Mg, Sc, Y, Mn, Fe, Co, Ni, Cu, Zn, Al, Cr, Pb, Sb, and B. Here, $0 < a \leq 1.2$, $0 < b \leq 0.9$, and $2.0 \leq c 2.3$. The value "a" representing the molar ratio of lithium increases and decreases during charging and discharging.

In particular, preferred is a lithium-nickel composite oxide represented by $Li_aNi_bMe_{1-b}O_2$, where M is at least one selected from the group consisting of Mn, Co, and Al, $0 < a \leq 1.2$, and $0.3 \leq b < 1$. From the viewpoint of achieving high capacity, more preferably, $0.85 \leq b < 1$ is satisfied. From the viewpoint of the stability of the crystal structure, more preferred is $Li_aNi_bCo_cAl_aO_2$ containing Co and Al as the element represented by M, where $0 < a \leq 1.2$, $0.85 \leq b < 1$, $0 < c < 0.15$, $0 < d \leq 0.1$, and b+c+d = 1.

The binder may be a resin material, examples of which include: fluorocarbon resins, such as polytetrafluoroethylene and polyvinylidene fluoride (PVDF); polyolefin resins, such as polyethylene and polypropylene; polyamide resins, such as aramid resin; polyimide resins, such as polyimide and polyamide imide; acrylic resins, such as polyacrylic acid, polymethyl acrylate, and ethylene-acrylic acid copolymer; vinyl resins, such as polyacrylonitrile and polyvinyl acetate; polyvinylpyrrolidone; and polyethersulfone. The binder may be used singly or in combination of two or more kinds.

Examples of the conductive agent include: carbon materials, such as graphite, carbon black, such as acetylene black, and carbon fibers (carbon nanotubes (CNTs), carbon fibers other than CNTs). The conductive agent may be used singly or in combination of two or more kinds.

The positive electrode current collector that can be used include a non-porous conductive substrate (metal foil, etc.) and a porous conductive substrate (mesh, net, punched sheet, etc.). Examples of the material of the positive electrode current collector include stainless steel, aluminum, aluminum alloy, and titanium. The thickness of the positive electrode current collector is, although not particularly limited to, preferably 1 to 50 $\mu$m, more preferably 5 to 20 $\mu$m.

[Negative electrode]

The negative electrode includes a belt-shaped negative electrode current collector. The negative electrode may have a negative electrode current collector, and a negative electrode mixture layer or a negative electrode active material layer formed (or supported) on the entire or a partial region of a surface of the negative electrode current collector. The negative electrode mixture layer or the negative electrode active material layer may be in the form of film. The negative electrode mixture layer or the negative electrode active material layer is supported on one surface or both surfaces of the negative electrode current collector.

The negative electrode has a negative electrode end part facing at least part of the positive electrode end part, and a negative electrode main part other than the negative electrode end part. The expansion rate of the negative electrode is higher at the negative electrode end part than at the negative electrode main part.

A ratio (R1/R2) of an expansion rate R1 at the negative electrode end part to an expansion rate R2 at the negative electrode main part may be 1.1 or more, and may be 1.5 or more. However, if the expansion rate at the negative electrode end part is excessively higher than that at the negative electrode main part, the distortion of the electrode group rather increases. Therefore, in consideration of the proportion by area of the exposed portion of the positive electrode current collector at the positive electrode end part, the expansion rate at the negative electrode end part is selected as appropriate. The R1/R2 ratio may be, for example, 4 or less.

The expansion rate of the negative electrode refers to a change rate of the thickness of a portion obtained by subtracting the thickness of the negative electrode current collector from the thickness of the negative electrode (in other words, the negative electrode mixture layer or the negative electrode active material layer) in a fully charged state, relative to that in a fully discharged state. Here, a fully discharged state may be a state in which the SOC (State of charge) is 0% to 3% (the DOD (Depth of discharge) is 100% to 97%), and a fully charged state may be a state in which the SOC is 97% to 100% (the DOD is 0% to 3%). The SOC indicates the ratio of the quantity of electricity charged, to the charge electricity quantity at full charge (100%) of a secondary battery. The charge electricity quantity at full charge generally means the rated capacity. In lithium-ion secondary batteries, in many cases, the state where the voltage has dropped to 2.5 V by discharging at 0.2C can be regarded as the SOC being 0%, and the state where the voltage has risen to 4.2 V by charging at 0.05C can be regarded as the SOC being 100%.

The expansion rate (X) can be calculated as a percentage (%) from the following equation, where T 100 is the thickness of the negative electrode in a fully charged state, T0 is the thickness of the negative electrode in a fully discharged state, and t is the thickness of the negative electrode current collector.

$$X\,(\%) = 100 \times \{(T100 - t) - (T0 - t)\}\,/\,(T0 - t)$$

The thickness T100 of the negative electrode in a fully charged state, the thickness T0 of the negative electrode in a fully discharged state, and the thickness t of the negative electrode current collector may be determined by any method as long as each thickness can be objectively determined. For example, a secondary battery in a fully charged state and a secondary battery in a fully discharged state are disassembled, from each of which the negative electrode may be taken out for measurement. Specifically, the average value of the T100 and the average value of the t at any five points in the negative electrode of a secondary battery in a fully discharged state and the average value of the T0 at any five points of a secondary battery in a fully charged state may be used to determine the value of X (%) from the above equation.

The negative electrode mixture layer is constituted of a negative electrode mixture. The negative electrode active material layer is constituted of a negative electrode mixture or a negative electrode active material. The negative electrode mixture contains a negative electrode active material as an essential component. The negative electrode mixture layer, therefore, may be called a negative electrode active material layer. The negative electrode active material may be a material that reversibly absorbs and releases lithium ions, which may be lithium metal, and may be lithium alloy. The negative electrode active material layer constituted of a material other than the negative electrode mixture is constituted of at least one selected from the group consisting of lithium metal and lithium alloy. The negative electrode mixture layer or the negative electrode active material layer is supported on one surface or both surfaces of the negative electrode current collector.

The negative electrode mixture contains a negative electrode active material as an essential component, and may contain, as optional components, a binder, a conductive agent, a thickener, and the like. Such a negative electrode mixture layer can be formed by, for example, applying a negative electrode slurry in which a negative electrode mixture containing particles of a negative electrode active material as an essential component and optional components is dispersed in a dispersion medium, onto a surface of a negative electrode current collector, followed by drying. The applied film after drying may be rolled, as necessary.

When the negative electrode has a negative electrode mixture layer, an alloy-forming material may be contained in the negative electrode mixture layer. The alloy-forming material contains a phase that reversibly forms an alloy with lithium. The phase that reversibly forms an alloy with lithium may be, for example, silicon (silicon phase). Such a phase undergoes considerably severe expansion and contraction during charging and discharging. The content ratio of the alloy-forming material in the negative electrode mixture layer may be set higher at the negative electrode end part than at the negative electrode main part. By this, the expansion rate of the negative electrode can be easily set higher at the negative electrode end part than that at the negative electrode main part.

In the category of the alloy-forming material, a Si-containing material, a Sn-containing material, Si, Sn, Si alloy, Sn alloy, and the like are included. In particular, a Si-containing material has high capacity and is suitable as the negative electrode active material. The Si-containing material contains a silicon phase. Silicon is capable of reversibly forming an alloy with lithium. The Si-containing material is a material that can reversibly absorb and release lithium ions.

The silicon-containing material, which contains silicon (silicon phase), undergoes considerably severe expansion and contraction during charging and discharging. By setting the content ratio of the silicon-containing material in the negative electrode mixture layer higher at the negative electrode end part than at the negative electrode main part, the expansion rate of the negative electrode can be easily set higher at the negative electrode end part than at the negative electrode main part.

A content ratio A mass% of the silicon-containing material in the negative electrode mixture layer at the negative electrode end part, and a content ratio B (mass%) of the silicon-containing material in the negative electrode mixture layer at the negative electrode main part, for example, may satisfy A ≥ 1.1B, may satisfy A ≥ 1.2B, and may satisfy A ≥ 1.3B.

The content ratio A may be, for example, 1 to 15 wt%. In this case, on the precondition that A ≥ B, the content ratio B may be 0 to 12 wt%, and on the precondition that A > B (or A ≥ 1.1B, A ≥ 1.2B, or A ≥ 1.3B), may be 0 to 12 wt%.

From another perspective, when the expansion rate at the negative electrode end part is 1 to 35%, the expansion rate at the negative electrode main part may be 0 to 30%. In this case, too, A ≥ B is the precondition. A ≥ 1.1B, A ≥ 1.2B, or A ≥ 1.3B may be the precondition.

The content ratio of silicon (i.e., silicon phase) contained in the negative electrode mixture layer at the negative electrode end part may be set higher than the content ratio of silicon contained in the negative electrode mixture layer at the negative electrode main part. A content ratio C mass% of silicon in the negative electrode mixture layer at the negative electrode end part and a content ratio D mass% of silicon in the negative electrode mixture layer at the negative electrode main part, for example, may satisfy $C \geq 1.1D$, may satisfy $C \geq 1.2D$, and may satisfy $C \geq 1.3D$.

The silicon-containing material may comprise composite particles each containing silicon phases, and a matrix phase in which the silicon phases are dispersed. The matrix phase may be constituted of a material having lithium ion conductivity. The matrix phase includes, for example, at least one selected from the group consisting of a silicon oxide phase and a carbon phase.

The silicon oxide phase contains Si and O, and may further contain a third element other than Si and O. The silicon oxide phase may be constituted of $SiO_2$, may be constituted of lithium silicate, and may be constituted of both.

The composite particles as the silicon-containing material (composite particles each containing silicon phases and a matrix phase in which the silicon phases are dispersed) may be, for example, in any of the following forms (a) to (c).

(a) First composite particles each containing silicon phases, and a silicon dioxide ($SiO_2$) phase in which the silicon phases are dispersed.
(b) Second composite particles each containing silicon phases, and a lithium silicate phase in which the silicon phases are dispersed.
(c) Third composite particles each containing silicon phases, and a carbon phase in which the silicon phases are dispersed.

The first composite particles (containing a silicon dioxide ($SiO_2$) phase and silicon phases dispersed in the silicon dioxide ($SiO_2$) phase) are superior in that the stability is high among the silicon-containing materials, and their changes in volume are small. The high stability is considered to be attributed to that the particle diameter of the silicon phases (or silicon particles) dispersed in the silicon dioxide phase is small, and deep charging is unlikely to proceed. The silicon dioxide phase includes relatively many sites that irreversibly trap lithium ions. Therefore, among the silicon-containing materials, the first composite particles tend to have a large irreversible capacity, but in return, are highly structurally stable, and their changes in volume are likely to be suppressed.

The first composite particles can be synthesized by, for example, heating a raw material silicon oxide in a non-oxidizing atmosphere, to allow a disproportionation reaction to proceed. In the disproportionation reaction, silicon fine particles can be uniformly produced in the silicon dioxide phase. The average particle diameter of the silicon fine particles produced through the disproportionation reaction is, for example, less than 100 nm, and can be 5 nm to 50 nm. For example, 95 to 100 mass% of the matrix phase of the first composite particles can be constituted of silicon dioxide. The overall composition of the first composite particles can be represented by a general formula $SiO_x$, where $0 < x < 2$, preferably $0.5 \leq x \leq 1.5$.

The content ratio of the silicon phases in the first composite particles can be, for example, 20 mass% to 60 mass%.

The second composite particles (containing a lithium silicate phase and silicon phases dispersed in the lithium silicate phase) are superior in that the irreversible capacity is small among the silicon-containing materials. With the second composite particles, excellent charge-discharge efficiency can be obtained. Especially, the effect is noticeable in the initial stage of charging and discharging.

In addition to Li, Si, and O, the lithium silicate phase may contain, as a third element, at least one selected from the group consisting of Group I elements (except Li) and Group II elements in the long-form periodic table. The Group I elements and the Group II elements can be, for example, K, Na, Mg, Ca, Sr, Ba, and the like. The lithium silicate phase may further contain Al, B, La, P, Zr, Ti, Fe, Cr, Ni, Mn, Cu, Mo, Zn, and the like.

The ratio (O/Si) of the number of O atoms to the number of Si atoms in the lithium silicate phase is, for example, more than 2 and less than 4. In this case, it is beneficial in terms of the stability and the lithium ion conductivity. The O/Si ratio may be more than 2 and less than 3. The ratio (Li/Si) of the number of Li atoms to the number of Si atoms in the lithium silicate phase is, for example, more than 0 and less than 4.

The composition of the lithium silicate can be represented by a general formula $Li_{2z}SiO_{2+z}$, where $0 < z < 2$. In view of the stability, the ease of fabrication, and the lithium ion conductivity of the lithium silicate, z preferably satisfies $0 < z < 1$, more preferably $z = 1/2$.

The second composite particles can be obtained by, for example, mixing lithium silicate with raw material silicon, and stirring and crushing the mixture with a stirrer, such as a ball mill, and then, firing the mixture in an inert atmosphere. The mixture may be sintered, and the sintered product may be pulverized into the second composite particles.

The content ratio of the silicon phases in the second composite particles can be, for example, 35 mass% or more and 80 mass% or less. With the second composite particles, in which the content ratio of the silicon phases can be changed as desired, it is easy to design a high-capacity negative electrode.

The third composite particles (containing a carbon phase and silicon phases dispersed in the carbon phase) are superior in that the irreversible capacity is small among the silicon-containing materials. In addition, the carbon phase can exhibit capacity through the Faradaic reaction with lithium ions. Therefore, among the silicon-containing materials, the third composite particles are beneficial for achieving high capacity.

The carbon phase may contain crystalline carbon (graphite), and may contain shapeless carbon with low crystallinity (i.e., amorphous carbon). The amorphous carbon may be a graphitizable carbon, a non-graphitizable carbon, or otherwise.

The third composite particles can be obtained by, for example, mixing a carbon source with raw material silicon, and stirring and crushing the mixture with a stirrer, such as a ball mill, and then, firing the mixture in an inert atmosphere. The mixture may be sintered, and the sintered product may be pulverized into the third composite particles.

As the carbon source, for example, saccharides, water-soluble resins, and the like can be used. For example, as the carbon source, carboxymethyl cellulose (CMC), polyvinylpyrrolidone, cellulose, sucrose, and the like may be used. In mixing the carbon source with the raw material silicon, for example, the carbon source and the raw material silicon may be dispersed in a dispersion medium, such as an alcohol.

The content ratio of the silicon phases in the third composite particles may be, for example, 40 mass% or more and 80 mass% or less. With the third composite particles, in which the content ratio of the silicon phases can be changed as desired, it is easy to design a high-capacity negative electrode.

The average particle diameter of the silicon phases (or silicon particles) in the second composite particles or the third composite particles is, for example, 100 nm or more and 500 nm or less, which may be 400 nm or less, and may be 200 nm or less. When the silicon phases have such a large average particle diameter, it is easy to increase the capacity of these composite particles.

The silicon phases dispersed in the matrix phase of the second composite particles or the third composite particles can be constituted of a plurality of crystallites. The crystallite size may be, for example, 30 nm or less, and may be 25 nm or less. In this case, the changes in volume due to expansion and contraction of the silicon phases during charging and discharging can be reduced as much as possible. The crystallite size is not particularly limited, and may be, for example, 5 $\mu$m or more, and may be 10 nm or more.

The crystallite size of the silicon phases is calculated using the Scherrer's equation from the half-value width of the diffraction peak attributed to the Si (111) plane of an X-ray diffraction (XRD) pattern of the silicon phase.

The average particle diameters of the first, second, and third composite materials may be, for example, 2 $\mu$m to 10 $\mu$m, and may be 4 $\mu$m to 7 $\mu$m. In this case, the stress caused by the changes in volume of the silicon phases during charging and discharging can be easily relaxed.

The average particle diameter means a particle diameter at 50% cumulative volume (volume average particle diameter) in a particle size distribution measured by, for example, a laser diffraction and scattering method. As the measuring instrument, for example, "LA-750" manufactured by Horiba, Ltd. (HORIBA) can be used. Hereinafter, with respect to the average particle diameter of the carbon material (graphite, etc.), measurement can be made in the similar manner.

The content ratios of the silicon phases in the first, second and third composite materials can be measured by, for example, Si-NMR.

The average particle diameters of the silicon phases in the first, second and third composite materials can be measured from a cross-sectional SEM (scanning electron microscope) photograph of the composite particle. Specifically, the average particle diameter of the silicon phases can be determined by averaging the maximum diameters of randomly selected 100 silicon particles.

The negative electrode mixture layer may contain a mixture of at least one kind of particles selected from the group consisting of the first, second and third composite particles, and particles of a material other than such composite particles.

As the material other than the Si-containing material, a carbon material, a spinel-type lithium titanium oxide, a spinel-type lithium manganese oxide, and the like are preferred. In particular, a carbon material is preferred. The carbon material may be graphite, graphitizable carbon (soft carbon), non-graphitizable carbon (hard carbon), and the like. In particular, graphite is preferred because of its excellent stability during charging and discharging and its low irreversible capacity.

Graphite refers to a carbon material having an interplanar spacing d002 of the (002) plane as measured by X-ray diffractometry of, for example, 0.340 nm or less. The crystallite size Lc(002) of the graphite particle as measured by X-ray diffraction diffractometry, for example, may be 5 nm or more, may be 5 nm or more and 300 nm or less, and may be 10 nm or more and 200 nm or less.

The average particle diameter of graphite is, for example, 1 $\mu$m or more and 30 $\mu$m or less.

When graphite and a silicon-containing material are used in combination, the proportion of the silicon-containing material in the negative electrode active material (the total of the graphite and the silicon-containing material) is, for example, 1 mass% or more and 20 mass% or less, may be 3 mass% or more and 15 mass% or less, and may be 3 mass% or more and 10 mass% or less. In this case, improved cycle characteristics and high capacity are likely to be achieved in a balanced manner.

The binder may be a resin material, examples of which include: fluorocarbon resins, such as polytetrafluoroethylene and polyvinylidene fluoride (PVDF); polyolefin resins, such as polyethylene and polypropylene; polyamide resins, such as aramid resin; polyimide resins, such as polyimide and polyamide imide; acrylic resins, such as polyacrylic acid, polymethyl acrylate, and ethylene-acrylic acid copolymer; vinyl resins, such as polyacrylonitrile and polyvinyl acetate; polyvinylpyrrolidone; polyethersulfone; and rubbery materials, such as styrene-butadiene copolymer rubber (SBR). The binder may be used singly or in combination of two or more kinds.

Examples of the conductive agent include: carbons, such as acetylene black; carbon fibers (carbon nanotubes (CNTs), carbon fibers other than CNTs); metal fibers; and metal powders, such as aluminum. The conductive agent may be used singly or in combination of two or more kinds.

Examples of the thickener include: cellulose derivatives (cellulose ether, etc.), such as carboxymethyl cellulose (CMC), modified products thereof (including salts such as Na salts), and methylcellulose; and saponified products of a polymer having a vinyl acetate unit, such as polyvinyl alcohol. The thickener may be used singly or in combination of two or more kinds.

The negative electrode current collector that can be used include a non-porous conductive substrate (metal foil, etc.) and a porous conductive substrate (mesh, net, punched sheet, etc.). Examples of the material of the negative electrode current collector include stainless steel, nickel, nickel alloy, copper, and copper alloy. The thickness of the negative electrode current collector is, although not particularly limited to, preferably 1 to 50 $\mu$m, more preferably 5 to 20 $\mu$m.

In the following, an example of the secondary battery according to an embodiment of the present disclosure will be specifically described with reference to the drawings. To the components of the below-described examples of the secondary battery, the components as described above can be applied. The components of the below-described examples of the secondary battery can be modified based on the description above. The matters as described below may be applied to the above embodiments. Of the components of the below-described example of the secondary battery, the components which are not essential to the secondary battery according to the present disclosure may be omitted. The figures below are schematic and not intended to accurately reflect the shape and the number of the actual members.

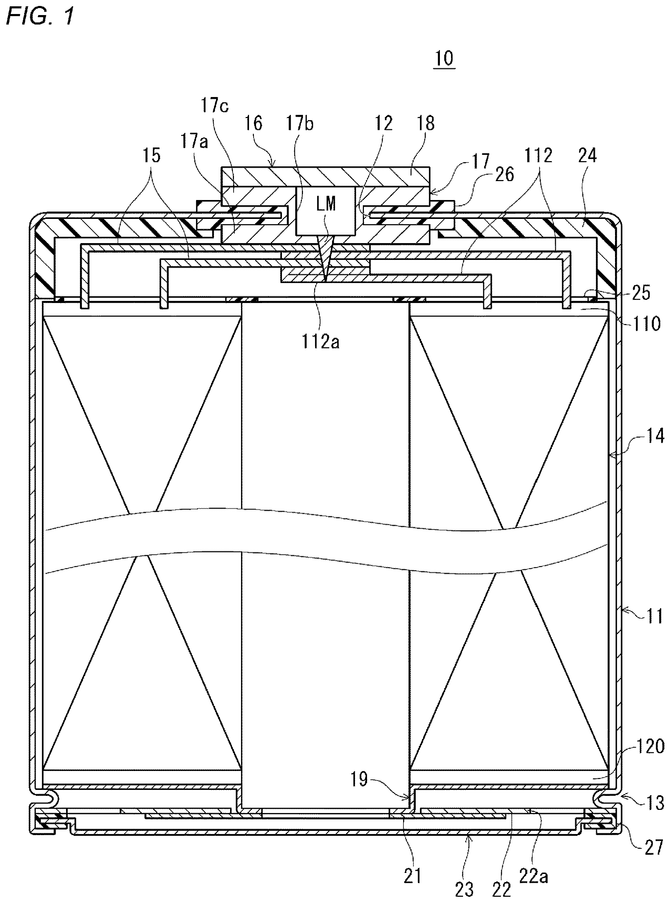

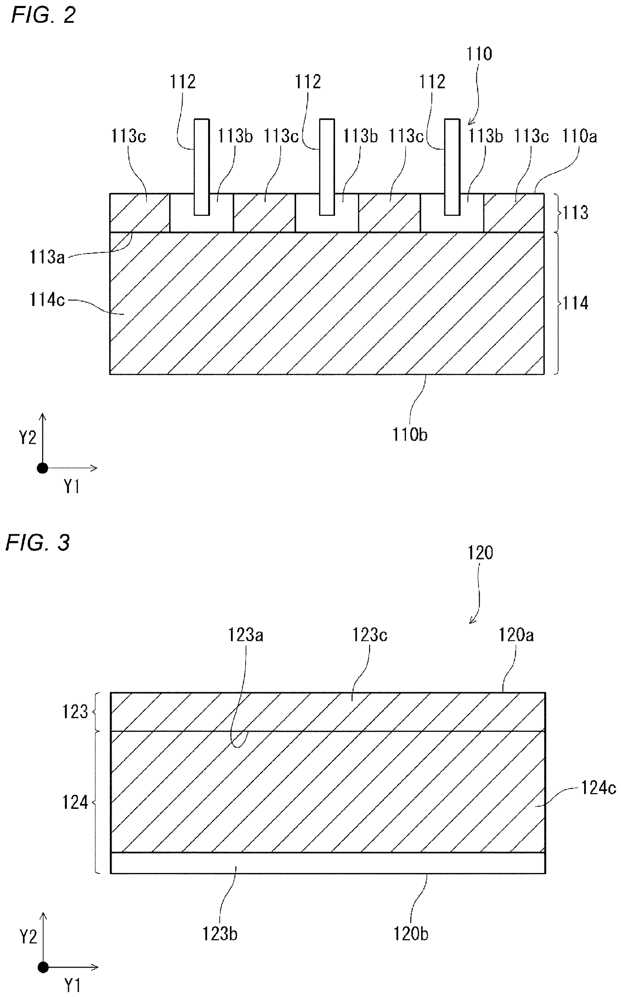

FIG. 1 is a schematic sectional view of a secondary battery 10 according to an example of the present embodiment. FIG. 2 is a schematic plan view of a positive electrode plan according to an example of the present embodiment. FIG. 3 is a schematic plan view of a negative electrode according to an example of the present embodiment.

The secondary battery 10 may be, for example, a lithium-ion secondary battery or a lithium secondary battery (lithium-metal secondary battery). As shown in FIG. 1, the secondary battery 10 includes a non-polar case 11, a wound electrode group 14, a plurality of positive electrode leads 112 constituted of a conductor, a positive electrode terminal 16 constituted of a conductor, an end-face current collecting plate 19 constituted of a conductor, a negative electrode current collecting plate 22 constituted of a conductor, and a sealing plate 23.

The case 11 is formed in a bottomed cylindrical shape having an opening at one end (the lower end in FIG. 1). The case 11 is constituted of a metal. A through-hole 12 for insertion of the positive electrode terminal 16 therethrough is formed in the center of the bottom (the upper end in FIG. 1) of the case 11. The case 11 houses an electrolyte (not shown) together with the electrode group 14. A recessed portion 13 recessed radially inward of the case 11 is formed near the opening of the case 11.

The electrode group 14 has a positive electrode 110 and a negative electrode 120. The electrode group 14 is a wound electrode group formed by winding the positive electrode 110 and the negative electrode 120, with a separator (not shown) interposed therebetween. The electrode group 14 is approximately cylindrical in shape as a whole.

One end of each of the plurality of the positive electrode leads 112 is connected to a positive electrode current collector exposed portion 113b in a positive electrode end part 113 of the positive electrode 110. The other end of each of the plurality of the positive electrode leads 112 is arranged so as to stand upright from one end face of the electrode group 14.

The plurality of the positive electrode leads 112 are overlapped with each other and connected to the positive electrode terminal 16 by welding. In the present embodiment, the number of the positive electrode leads 112 is eight, but is not limited thereto. In FIG. 1, only four out of the eight positive electrode leads 112 are shown.

The material of each positive electrode lead 112 is, for example, stainless steel, aluminum, aluminum alloy, nickel, nickel alloy, and the like.

Between the electrode group 14 and the bottom of the case 11, an insulating member 24 for providing electrical insulation therebetween is disposed. The insulating member 24 is constituted of, for example, an insulating resin. The insulating member 24 may be attached to the bottom of the case 11.

The positive electrode terminal 16 is provided opposite to the electrode group 14, with the plurality of the positive electrode leads 112 interposed therebetween. The positive electrode terminal 16 is inserted into the through-hole 12 in the bottom of the case 11, and passes through the bottom of the case 11. The positive electrode terminal 16 is constituted of a metal, and may be a rivet or the like. The positive electrode terminal 16 is insulated from the case 11 by a positive electrode gasket 26 constituted of an insulating material. Between the positive electrode terminal 16 and the electrode group 14, an insulating plate 25 for providing electrical insulation therebetween is disposed.

The positive electrode terminal 16 has a first terminal member 17 extending inside and outside the case 11, and a disc-shaped second terminal member 18 joined to the first terminal member 17 and exposed outside the case 11. The first terminal member 17 has a disc-shaped first portion 17a, a hollow cylindrical second portion 17b formed continuously with the first portion 17a and inserted into the through-hole 12, and a third portion 17c extending radially outward from the end of the second portion 17b and joined to the second terminal member 18. The first terminal member 17 is welded, at the first portion 17a, to the plurality of the positive electrode leads 112 by a laser which is irradiated in the direction from the first terminal member 17 toward the electrode group 14. Thus, the positive electrode terminal 16 is electrically connected to the positive electrode 110 via the plurality of the positive electrode leads 112, and functions as an external positive electrode terminal of the secondary battery 10. The first terminal member 17 is an example of a terminal member.

Of the plurality of the positive electrode leads 112, at least the positive electrode lead 112 closest to the electrode group 14 (the positive electrode lead 112 on the lowermost side in FIG. 1) has a folded portion 112a which is formed by folding a part of the positive electrode lead 112 (specifically, a part on the tip end side) and includes partially a laser mark LM formed by the above laser. The folded portion 112a is disposed opposite to the electrode group 14, with the insulating plate 25 interposed therebetween.

The end-face current collecting plate 19 is constituted of a metal. The end-face current collecting plate 19 may be of any shape, and may be, for example, approximately cross-shaped as a whole. The end-face current collecting plate 19 is electrically connected to the negative electrode 120 of the electrode group 14.

The negative electrode current collecting plate 22 is electrically connected to the end-face current collecting plate 19 via a contact strip 21 made of a metal (which can be formed in a ring shape, for example). Thus, the negative electrode current collecting plate 22 is electrically connected to the negative electrode 120. The negative electrode current collecting plate 22 and the contact strip 21 may be welded to each other (e.g., laser-welded). The contact strip 21 and the end-face current collecting plate 19 may be welded to each other (e.g., laser-welded). The negative electrode current collecting plate 22 may be directly connected to the end-face current collecting plate 19. In this case, the contact strip 21 is not necessary. The negative electrode current collecting plate 22 has one or more injection holes 22a for injecting an electrolyte solution therethrough into the case 11. The negative electrode current collecting plate 22 is welded (e.g., laser-welded) at its outer rim portion, to the aforementioned recessed portion 13 of the case 11. Thus, the case 11 is electrically connected to the negative electrode 120, via the negative electrode current collecting plate 22, etc.

The sealing plate 23 seals the opening of the case 11. The sealing plate 23 is constituted of a metal and is approximately disc-shaped. The sealing plate 23 is electrically insulated from the case 11 by the negative electrode gasket 27. The sealing plate 23 of the present embodiment is electrically connected neither to the positive electrode 110 nor to the negative electrode 120 of the electrode group 14, but not limited thereto. The sealing plate 23 has an explosion-proof mechanism (not shown) configured to activate when the internal pressure of the case 11 exceeds a predetermined value.

The positive electrode 110 illustrated in FIG. 2 shows a state before being wound into the electrode group 14. In FIG. 2, an arrow Y1 indicates the winding direction of the positive electrode 110 when producing the electrode group 14, and is the longitudinal direction of the positive electrode 110. In addition, in FIG. 2, an arrow Y2 perpendicular to the arrow Y1 indicates the winding axis direction of the positive electrode 110 (i.e., the winding axis direction of the electrode group 14), and is the lateral direction of the positive electrode 110.

As illustrated in FIG. 2, the positive electrode 110 has the positive electrode end part 113 including one end 110a in the lateral direction of the positive electrode 110, and the positive electrode main part 114 other than the positive electrode end part 113. The positive electrode main part 114 is a region from a positive electrode center-side end 113a of the positive electrode end part 113 to the other end 110b in the lateral direction of the positive electrode 110. A ratio of the width (length in the lateral direction) of the positive electrode end part 113 to the width (length in the lateral direction) of the positive electrode main part 114 is, for example, in the range of 1:15 to 3:4 or 1:12 to 1:7.

The positive electrode end part 113 of the positive electrode 110 has a positive electrode current collector exposed portion 113b where the positive electrode mixture layer is not disposed on the positive electrode current collector, and a first positive electrode mixture portion 113c where the positive electrode mixture layer is disposed on the positive electrode current collector. The positive electrode main part 114 has a second positive electrode mixture portion 114c where the positive electrode mixture layer is disposed on the positive electrode current collector.

The positive electrode current collector exposed portion 113b is provided intermittently at a plurality of positions (e.g., eight positions) along the longitudinal direction of the positive electrode current collector. The exposed portion 113b is free of the positive electrode mixture layer from the one end 110a in the lateral direction of the positive electrode 110 through to the positive electrode main part 114.

The length of the positive electrode current collector exposed portion 113b per one position in the longitudinal direction of the positive electrode current collector may be 1% to 10% of the length in the longitudinal direction of the positive electrode current collector, and the total length of all the positive electrode current collector exposed portions 113b in the longitudinal direction of the positive electrode current collector may be 5% to 30% or 8% to 20% of the length in the longitudinal direction of the positive electrode current collector.

It is desirable that the intervals between the positive electrode current collector exposed portions 113b adjacent to each other are as equal as possible. For example, given that the length of the positive electrode current collector is denoted by L100, and the number of the positive electrode current collector exposed portions 113b is denoted by n, the intervals between the positive electrode current collector exposed portions 113b adjacent to each other may be $0.8 \times L/n$ to $1.2 \times L/n$.

A tab-shaped positive electrode lead 112 is connected to each of the positive electrode current collector exposed portions 113b. The plurality of the positive electrode leads 112 are bundled and connected to the first portion 17a of the first terminal member 17.

In the present embodiment, a mass W1 per unit area of the positive electrode mixture layer in the first positive electrode mixture portion 113c may be approximately the same as a mass W2 per unit area of the positive electrode mixture layer in the second positive electrode mixture portion 114c, and a ratio of the difference ($\Delta$W) between the W1 and the W2 to the W1, for example, may be 4% or less, and may be 3% or less.

As illustrated in FIG. 3, the negative electrode 120 has a negative electrode end part 123 that faces at least part (preferably 70% or more) of the positive electrode end part 113, and a negative electrode main part 124 other than the negative electrode end part 123. The negative electrode main part 124 faces at least part (preferably 70% or more) of the positive electrode main part 114. That is, the negative electrode 120 has the negative electrode end part 123 including one end 120a in the lateral direction of the negative electrode 120, and the negative electrode main part 124 other than the negative electrode end part 123. The negative electrode main part 124 is a region from a negative electrode center-side end 123a of the negative electrode end part 123 to the other end 120b in the lateral direction of the negative electrode 120. A ratio of the width (length in the lateral direction) of the negative electrode end part 123 to the width (length in the lateral direction) of the negative electrode main part 124 is, as in the positive electrode 110, in the range of, for example, 1:15 to 3:4 or 1:12 to 1:7.

As described above, it is designed such that the expansion rate is higher at the negative electrode end part 123 than at the negative electrode main part 124. That is, the composition of the first negative electrode mixture portion 123c that the negative electrode end part 123 has is different from that of the second negative electrode mixture portion 124c that the negative electrode main part 124 has. For example, the content ratio A mass% of the silicon-containing material in the negative electrode mixture layer at the negative electrode end part 123 and the content ratio B mass% of the silicon-containing material in the negative electrode mixture layer of the negative electrode main part 124 may satisfy $A \geq 1.1B$. By this, the expansion rate at the negative electrode end part 123 can be higher than the expansion rate at the negative electrode main part 124. As a result, a higher stress is applied to one end in the lateral direction of the negative electrode 120 during charging and discharging of the secondary battery 10, and the phenomenon in which a gap occurs between the electrode plates near the end face of the electrode group 14 is suppressed.

The negative electrode 120, on the other end 120b side in the lateral direction, has a negative electrode current collector exposed portion 123b on which the negative electrode mixture layer is not disposed on the negative electrode current collector. The negative electrode current collector exposed portion 123b is formed along the longitudinal direction of the negative electrode current collector. Accordingly, the negative electrode current collector exposed portion 123b is exposed at the other end face of the electrode group 14. The negative electrode current collector exposed portion 123b is connected to the end-face current collecting plate 19 by, for example, laser welding.

An example of the method for producing the negative electrode 120 will be described. First, two kinds of negative electrode mixtures having different compositions are separately mixed with a liquid dispersion medium, to prepare two kinds of negative electrode slurries. Then, a first negative electrode slurry is applied onto a negative electrode current collector along the longitudinal direction thereof on its one end side in the lateral direction, so as to have a predetermined width and thickness, to form a first negative electrode mixture portion at the negative electrode end part. Also, the second negative electrode slurry is applied in a predetermined thickness onto a region other than the negative electrode end part, excluding a predetermined exposed portion of the negative electrode current collector, to form a second negative electrode mixture portion at the negative electrode main part. At this time, the content ratio A mass% of the silicon-containing material in the negative electrode mixture of the first negative electrode slurry and the content ratio B mass% of the silicon-containing material in the negative electrode mixture of the second negative electrode slurry satisfy, for example, $A \geq 1.1B$. The first negative electrode mixture portion and the second negative electrode mixture portion are, after drying, rolled using a roller or the like.

[Electrolyte]

The electrolyte may be a liquid electrolyte (electrolyte solution), may be a gel electrolyte, and may be a solid electrolyte. The liquid electrolyte is, for example, an electrolyte solution containing a nonaqueous solvent, and a salt dissolved in the nonaqueous solvent. The concentration of the salt in the electrolyte solution is, for example, 0.5 mol/L or more and 2 mol/L or less. The electrolyte solution may contain a known additive.

The gel electrolyte contains a salt and a matrix polymer, or contains a salt, a nonaqueous solvent, and a matrix polymer. As the matrix polymer, for example, a polymer material that absorbs a nonaqueous solvent and turns into a gel is used. Examples of the polymer material include fluorocarbon resins, acrylic resins, polyether resins, and polyethylene oxide.

As the solid electrolyte, for example, a known material for use in all-solid lithium-ion secondary batteries and the like (e.g., oxide-based solid electrolyte, sulfide-based solid electrolyte, halide-based solid electrolyte) is used.

The liquid nonaqueous electrolyte is prepared by, for example, dissolving a salt in a nonaqueous solvent. The salt is an electrolyte salt that ionically dissociates in the electrolyte, and can include, for example, a lithium salt. The electrolyte may contain various additives. The electrolyte is usually used as it is in a liquid state, but may be in a state in which the fluidity is restricted by a gelling agent or the like.

As the nonaqueous solvent, for example, a cyclic carbonic acid ester, a chain carbonic acid ester, a cyclic carboxylic acid ester, a chain carboxylic acid ester, and the like are used. Examples of the cyclic carbonic acid ester include propylene carbonate (PC), and ethylene carbonate (EC). A cyclic carbonic acid ester having an unsaturated bond, such as vinylene carbonate (VC), may be used. A cyclic carbonic acid ester having a fluorine atom, such as fluoroethylene carbonate (FEC), may be used. Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL), and γ-valerolactone (GVL). Examples of the chain carboxylic acid ester include methyl formate, ethyl formate, propyl formate, methyl acetate, ethyl acetate, propyl acetate, methyl propionate, ethyl propionate, and propyl propionate. The nonaqueous solvent may be used singly or in combination of two or more kinds.

Examples of the lithium salt include $LiClO_4$, $LiBF_4$, $LiPF_6$, $LiAlCl_4$, $LiSbF_6$, $LiSCN$, $LiCF_3SO_3$, $LiCF_3CO_2$, $LiAsF_6$, $LiB_{10}Cl_{10}$, lower aliphatic lithium carboxylate, LiCl, LiBr, LiI, borates, and imide salts. Examples of the borates include lithium bis(1,2-benzenediolate(2-)-O,O') borate, lithium bis(2,3-naphthalenediolate(2-)-O,O') borate, lithium bis(2,2'-biphenyldiolate(2-)-O,O') borate, and lithium bis(5-fluoro-2-olate-1-benzenesulfonate-O,O') borate. Examples of the imide salts include lithium bisfluorosulfonylimide ($LiN(FSO_2)_2$), lithium bistrifluoromethanesulfonyl imide ($LiN(CF_3SO_2)_2$), lithium trifluoromethanesulfonyl nonafluorobutanesulfonyl imide ($LiN(CF_3SO_2)(C_4F_9SO_2)$), and lithium bispenta-fluoroethanesulsulfonyl imide ($LiN(C_2F_5SO_2)_2$). The lithium salt may be used singly or in combination of two or more kinds. The concentration of the lithium salt in the nonaqueous electrolyte solution is, for example, 0.5 mol/L or more and 2 mol/L or less.

[Separator]

It is desirable to interpose a separator between the positive electrode and the negative electrode. The separator is excellent in ion permeability and has moderate mechanical strength and electrically insulating properties. As the separator, for example, a microporous thin film, a woven fabric, a nonwoven fabric, and the like can be used. The material of the separator is preferably a polyolefin, such as polypropylene and polyethylene.

(Supplementary notes)

The above description of embodiments discloses the following techniques.

(Technique 1)

A secondary battery, comprising

a positive electrode, a negative electrode, an electrolyte, and a separator, wherein
the positive electrode and the negative electrode are wound with the separator interposed between the positive electrode and the negative electrode,
the positive electrode includes a belt-shaped positive electrode current collector, and a positive electrode mixture layer disposed on the positive electrode current collector,
the positive electrode has a positive electrode end part including one end of the positive electrode in a lateral direction, and a positive electrode main part other than the positive electrode end part,
the positive electrode end part has an exposed portion of the positive electrode current collector provided intermittently at a plurality of positions along a longitudinal direction of the positive electrode current collector, the exposed portion being free of the positive electrode mixture layer from the one end in the lateral direction through to the positive electrode main part,
the negative electrode includes a belt-shaped negative electrode current collector,
the negative electrode has a negative electrode end part facing at least part of the positive electrode end part, and a negative electrode main part other than the negative electrode end part, and
an expansion rate of the negative electrode is higher at the negative electrode end part than at the negative electrode main part.

(Technique 2)

The secondary battery according to technique 1, wherein

the negative electrode has a belt-shaped negative electrode current collector, and a negative electrode mixture layer disposed on the negative electrode current collector,
the negative electrode mixture layer includes a silicon-containing material containing silicon, and
a content ratio of the silicon-containing material in the negative electrode mixture layer is higher at the negative electrode end part than at the negative electrode main part.

(Technique 3)

The secondary battery according to technique 1 or 2, wherein

a content ratio A mass% of the silicon-containing material in the negative electrode mixture layer at the negative electrode end part, and
a content ratio B mass% of the silicon-containing material in the negative electrode mixture layer at the negative electrode main part satisfy $A \geq 1.1B$.

(Technique 4)

The secondary battery according to any one of techniques 1 to 3, wherein

the content ratio A is 1 to 15 wt%, and
the content ratio B is 0 to 12 wt%.

(Technique 5)

The secondary battery according to any one of techniques 1 to 4, wherein

the expansion rate at the negative electrode end part is 1 to 35%, and
the expansion rate at the negative electrode main part is 0 to 30%.

The present invention will be specifically described below with reference to Examples and Comparative Examples. It is to be noted, however, that the present invention is not limited to the following Examples.

<Examples 1 to 6 and Comparative Examples 1 to 3>

[Production of negative electrode]

A negative electrode having physical properties as shown in Table 1 was prepared. Specifically, an appropriate amount of water was added to a predetermined negative electrode mixture, to obtain a negative electrode slurry. As the negative electrode mixture, a mixture of $SiO_x$, where x = 1.0, serving as a negative electrode active material, graphite serving as a negative electrode active material, styrene-butadiene copolymer rubber (SBR) serving as a binder, and carboxymethyl cellulose (CMC) serving as a thickener was used, and a first negative electrode slurry and a second negative electrode slurry were prepared.
In the negative electrode mixture, the mass ratio of the negative electrode active material (the total of $SiO_x$ and graphite), SBR, and CMC was set to 98:1:1.
The first negative electrode slurry and the second negative electrode slurry were applied onto both surfaces of a copper foil serving as a negative electrode current collector, and the applied films were dried, and rolled, to form a negative electrode mixture layer on each surface. Thus, a negative electrode as illustrated in FIG. 3 was obtained. Specifically, the first negative electrode slurry was applied in a predetermined thickness onto the negative electrode current collector along the longitudinal direction of the cupper foil on its one end side in the lateral direction, dried, and rolled, to form a negative electrode end part having a first negative electrode mixture portion. Subsequently, the second negative electrode slurry was applied in a predetermined thickness onto a part of the negative electrode current collector other than the negative electrode end part, dried, and rolled, to form a negative electrode main part having a second negative electrode mixture portion. Here, a part of the negative electrode current collector on its other end side was left as an exposed portion. The first negative electrode mixture portion and the second negative electrode mixture portion were rolled simultaneously.

[Production of positive electrode]

An appropriate amount of NMP was added to a positive electrode mixture, to obtain a positive electrode slurry. As the positive electrode mixture, a mixture of a lithium-containing composite oxide serving as a positive electrode active material, carbon black serving as a conductive agent, and polyvinylidene fluoride (PVDF) serving as a binder was used. The lithium-containing composite oxide used here was $LiNi_{0.8}Co_{0.1}Mn_{0.1}O_2$. In the positive electrode mixture, the mass ratio of the lithium-containing composite oxide, the carbon black, and the PVDF was set to 98:1:1.

The positive electrode slurry was applied onto both surface of an aluminum foil serving as a positive electrode current collector, and the applied films were dried and rolled, to form a positive electrode mixture layer on each surface. Thus, a positive electrode as illustrated in FIG. 2 was obtained. Specifically, the positive electrode slurry was intermittently applied in a predetermined thickness onto the positive electrode current collector along the longitudinal direction of the aluminum foil on its one end side in the lateral direction, dried, and rolled, to form a positive electrode end part having a first positive electrode mixture portion. In addition, the positive electrode slurry was applied in a predetermined thickness onto a part of the positive electrode current collector other than the positive electrode end part, dried, and rolled, to form a positive electrode main part having a second positive electrode mixture portion. The first positive electrode mixture portion and the second positive electrode mixture portion were rolled simultaneously. The positive electrode current collector exposed portion at the positive electrode end part was provided at eight positions, and a positive electrode lead was attached to each of the exposed portions. The width of the positive electrode end part was set to 12 mm, and the width of the positive electrode main part was set to 62 mm.

[Preparation of electrolyte]

To a nonaqueous solvent which was a 1:3 (volume ratio) mixture of ethylene carbonate (EC) and dimethyl carbonate (DMC), vinylene carbonate (VC) was added, to which $LiPF_6$ was then dissolved, to prepare an electrolyte. The VC content with respect to the whole electrolyte was set to 5 mass%. The concentration of $LiPF_6$ in the electrolyte was set to 1.5 mol/L.

[Fabrication of secondary battery]

In an inert gas atmosphere, the positive electrode and the negative electrode were wound with a separator (a microporous film made of polyethylene) interposed therebetween, to form an electrode group. The electrodes were stacked such that the positive electrode end part was arranged on one end-face side of the electrode group, and the exposed portion of the negative electrode current collector was arranged on the other end-face side of the electrode group. Using the electrode group and the electrolyte, cylindrical lithium-ion secondary batteries (batteries A1 to A6 of Examples and batteries B1 to B3 of Comparative Examples) as illustrated in FIG. 1 were completed.

A plurality of the positive electrode leads were bundled, and electrically connected to the first portion of the first terminal member.

The exposed portion of the negative electrode current collector was connected to the end-face current collecting plate by laser welding, and the end-face current collecting plate was electrically connected to the negative electrode current collecting plate via a contact strip.

[Evaluation]

One thousand secondary batteries were produced per each Example and each Comparative Example. In a 25 °C temperature environment, a constant-current charging was performed at 0.2C, and when the battery voltage reached 4.2 V, a constant-voltage charging was performed until the charge current reached 0.02C. After a rest for 10 minutes, a constant-current discharging was performed at 0.2C until the battery voltage reached 2.5 V. With this charging and discharging counted as one cycle, 100 cycles were performed.

The electrode groups taken out from the secondary batteries of each Example and each Comparative Example after the charge-discharge test were observed, to confirm the presence or absence of a gap between the electrode plates near the end face of the electrode groups. The results are shown in Table 1.

When one end in the lateral direction of the positive electrode in the electrode group before the charge-discharge test was spaced away from the separator opposite thereto by 0.1 mm or more, it was evaluated as a gap having occurred between the electrode plates, and the occurrence frequency in 1000 batteries was determined.

[Table 1]

| | first negative electrode mixture portion | | second negative electrode mixture portion | | evaluation | ratio of expansion rates |
|---|---|---|---|---|---|---|
| | expansion rate (%) | content ratio of Si-containing material (wt%) | expansion rate (%) | content ratio of Si-containing material (wt%) | gap occurrence frequency (%) | R1/R2 |
| A1 | 20 | 5 | 15 | 3 | 2/1000 | 1.33 |
| A2 | 10 | 2 | 5 | 0 | 2/1000 | 2 |
| A3 | 20 | 5 | 5 | 0 | 3/1000 | 4 |
| A4 | 23 | 5.5 | 20 | 5 | 4/1000 | 1.15 |
| A5 | 35 | 15 | 29 | 10 | 5/1000 | 1.2 |
| A6 | 37 | 20 | 32 | 15 | 10/1000 | 1.06 |
| B1 | 5 | 0 | 5 | 0 | 15/1000 | 1 |
| B2 | 20 | 5 | 20 | 5 | 20/1000 | 1 |
| B3 | 15 | 3 | 20 | 5 | 25/1000 | 0.75 |

Table 1 shows that, by setting the expansion rate of the negative electrode (here, the negative electrode mixture layer) higher at the negative electrode end part than at the negative electrode main part, it is possible to remarkably suppress the occurrence of a gap between the electrode plates near the end face of the electrode group, even when a positive electrode current collector exposed portion free of the positive electrode mixture layer is provided at the positive electrode end part.

[Industrial Applicability]

The secondary battery according to the present disclosure is useful as a main power source for mobile communication devices, portable electronic devices, electric cars, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

10: secondary battery
11: case

12: through-hole
13: recessed portion

14: electrode group
16: positive electrode terminal

17: first terminal member (terminal member)

17a: first portion
17b: second portion
17c: third portion

18: second terminal member

19: end-face current collecting plate

21: contact strip

22: negative electrode current collecting plate

22a: injection hole

23: sealing plate

24: insulating member

25: insulating plate

26: positive electrode gasket

27: negative electrode gasket

LM: laser mark

110: positive electrode

110a one end

110b other end

112 positive electrode lead

112a: folded portion

113 positive electrode end part

113a positive electrode center-side end

113b positive electrode current collector exposed portion

113c first positive electrode mixture portion

114 positive electrode main part

114c second positive electrode mixture portion

120: negative electrode

120a one end

120b other end

123 negative electrode end part

123a negative electrode center-side end

123b negative electrode current collector exposed portion

123c first negative electrode mixture portion

124 negative electrode main part

124c second negative electrode mixture portion

**Claims**

1. A secondary battery, comprising

a positive electrode, a negative electrode, an electrolyte, and a separator, wherein
the positive electrode and the negative electrode are wound with the separator interposed between the positive electrode and the negative electrode,
the positive electrode includes a belt-shaped positive electrode current collector, and a positive electrode mixture layer disposed on the positive electrode current collector,
the positive electrode has a positive electrode end part including one end of the positive electrode in a lateral direction, and a positive electrode main part other than the positive electrode end part,
the positive electrode end part has an exposed portion of the positive electrode current collector provided intermittently at a plurality of positions along a longitudinal direction of the positive electrode current collector, the exposed portion being free of the positive electrode mixture layer from the one end in the lateral direction through to the positive electrode main part,
the negative electrode includes a belt-shaped negative electrode current collector,
the negative electrode has a negative electrode end part facing at least part of the positive electrode end part, and a negative electrode main part other than the negative electrode end part, and
an expansion rate of the negative electrode is higher at the negative electrode end part than at the negative electrode main part.

2. The secondary battery according to claim 1, wherein

the negative electrode has a belt-shaped negative electrode current collector, and a negative electrode mixture layer disposed on the negative electrode current collector,

the negative electrode mixture layer includes a silicon-containing material containing silicon, and

a content ratio of the silicon-containing material in the negative electrode mixture layer is higher at the negative electrode end part than at the negative electrode main part.

3. The secondary battery according to claim 2, wherein

a content ratio A mass% of the silicon-containing material in the negative electrode mixture layer at the negative electrode end part, and

a content ratio B mass% of the silicon-containing material in the negative electrode mixture layer at the negative electrode main part satisfy $A \geq 1.1B$.

4. The secondary battery according to claim 3, wherein

the content ratio A is 1 to 15 wt%, and

the content ratio B is 0 to 12 wt%.

5. The secondary battery according to any one of claims 1 to 3, wherein

the expansion rate at the negative electrode end part is 1 to 35%, and

the expansion rate at the negative electrode main part is 0 to 30%.

## FIG. 1

*FIG. 2*

*FIG. 3*

## INTERNATIONAL SEARCH REPORT

| | International application No. |
|---|---|
| | **PCT/JP2024/000509** |

**A.    CLASSIFICATION OF SUBJECT MATTER**

*H01M 10/0587*(2010.01)i; *H01M 4/13*(2010.01)i; *H01M 4/48*(2010.01)i
FI:    H01M10/0587; H01M4/48; H01M4/13

According to International Patent Classification (IPC) or to both national classification and IPC

**B.    FIELDS SEARCHED**

Minimum documentation searched (classification system followed by classification symbols)

H01M10/0587; H01M4/13; H01M4/48

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | WO 2022/209172 A1 (PANASONIC INTELLECTUAL PROPERTY MANAGEMENT CO., LTD.) 06 October 2022 (2022-10-06)<br>paragraphs [0001], [0012], [0034], [0036], [0037], fig. 1, 14 | 1-5 |
| Y | JP 2015-191879 A (HITACHI, LTD.) 02 November 2015 (2015-11-02)<br>paragraphs [0012]-[0020], fig. 1-3 | 1-5 |
| Y | JP 2016-103446 A (HITACHI AUTOMOTIVE SYSTEMS, LTD.) 02 June 2016 (2016-06-02)<br>claim 1, paragraphs [0042], [0043] | 1-5 |
| Y | JP 2018-106903 A (TOYOTA JIDOSHA KABUSHIKI KAISHA) 05 July 2018 (2018-07-05)<br>paragraphs [0008], [0017], [0018], [0026]-[0030], table 1 | 1-5 |

☐ Further documents are listed in the continuation of Box C.        ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 March 2024** | **26 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
**Information on patent family members**

International application No.

**PCT/JP2024/000509**

| Patent document cited in search report | | | Publication date (day/month/year) | Patent family member(s) | Publication date (day/month/year) |
|---|---|---|---|---|---|
| WO | 2022/209172 | A1 | 06 October 2022 | CN 117043979 A paragraphs [0001], [0038], [0061], [0064], [0065], fig. 1, 14 | |
| JP | 2015-191879 | A | 02 November 2015 | (Family: none) | |
| JP | 2016-103446 | A | 02 June 2016 | (Family: none) | |
| JP | 2018-106903 | A | 05 July 2018 | (Family: none) | |

Form PCT/ISA/210 (patent family annex) (July 2022)

**EP 4 661 145 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023013064 A

- WO 2020045375 A